# EUROPEAN PATENT APPLICATION

(11) **EP 2 184 486 A2**
(43) Date of publication of application: **12.05.2010**
(21) Application number: 09174274.2
(22) Date of filing: 28.10.2009
(51) Int. Cl.: F03D 11/00

(54) **Wind turbine fluid filtering system**

(30) Priority: 06.11.2008 US 265824
(71) Applicant: General Electric Company, Schenectady, NY 12345 (US)
(72) Inventor: Nies, Jacob Johannes, 8042 HA, Zwolle (NL)
(74) Representative: Bedford, Grant Richard

(57) **Abstract**

A wind turbine power generation system (105) is disclosed that includes a backflushing filter system (200). The backflushing filter system (200) may be include a backflushing filter (210) in fluid communication with an auxiliary power consumer such as any one of a hydraulic pumping system, a gearbox oil circuit, a mainbearing oil circuit, a brake oil circuit, and combinations thereof. The backflushing filter system (200) further includes a containing filter (230) for removing particulate contamination from the backflushing filter system. (200)

## Description

The present disclosure relates generally to wind power fluid systems, and more particularly to a method and system for removing fluid contamination in fluid systems of wind plants.

Recently, wind turbines have received increased attention as an environmentally safe and relatively inexpensive alternative energy source. With this growing interest, considerable efforts have been made to develop wind turbines that are reliable and efficient.

Generally, a wind turbine includes a plurality of blades coupled to a rotor through a hub. The rotor is mounted within a housing or nacelle, which is positioned on top of a tubular tower or base. Utility grade wind turbines (i.e. wind turbines designed to provide electrical power to a utility grid) can have large rotors (e.g., thirty or more meters in diameter). Blades on these rotors transform wind energy into a rotational torque or force that drives the rotor. The rotor is rotationally coupled to one or more generators or hydraulic systems, which are components in the main power conversion system that converts the mechanical energy into electricity. In the case where the wind turbine uses hydraulic systems for power conversion, the hydraulic system includes oil circuits for driving motors and auxiliary equipment. The wind turbine may also include additional systems such as a gearbox, main bearing, auxiliary power conversion and brake systems that may also include oil circuits for lubrication and cooling.

Wind turbine oil circuits have used filters to remove contaminants such as dirt and particles from the oil. These filters require replacement after determined periods of use in order for the filters to remain effective and also to prevent increased oil circuit pressure from filters as they trap particles. Additionally, the filter media and screens of these filters degrade over use and often require circuits to be shut down for maintenance and/or replacement.

Therefore, what is needed is a method and system for filtering fluids, such as oil in the oil circuits of a wind plant that reduces maintenance and operational costs.

One object of the present disclosure is to provide a wind turbine backflushing system that permits fluid systems in a wind turbine power generation system to operate within a predetermined pressure drop range.

According to a first embodiment of the disclosure, a wind turbine power generation system is disclosed that includes a backflushing filter system.

According to a second embodiment of the disclosure, a method of cleaning a fluid of a wind turbine power generation system is disclosed that includes circulating a fluid through a backflushing filter system of an oil circuit of the wind turbine power generation system.

Further aspects of the method and system are disclosed herein. The features as discussed above, as well as other features and advantages of the present disclosure will be appreciated and understood by those skilled in the art from the following detailed description and drawings, in which:
FIG. 1 shows a side view of an exemplary wind turbine.
Fig. 2 is a schematic illustration of an exemplary embodiment of a wind turbine power generation system according to the disclosure.
Fig. 3 is a schematic illustration of an exemplary embodiment of the pumping subsystem shown in Fig. 2.
Fig. 4 is an illustration of an exemplary backflushing filter system according to the disclosure.
Fig. 5 is an illustration of an exemplary configuration of a lubricating system according to the disclosure.

Wherever possible, the same reference numbers will be used throughout the drawings to refer to the same or like parts.

The present disclosure now will be described more fully hereinafter with reference to the accompanying drawings, in which a preferred embodiment of the disclosure is shown. This disclosure may, however, be embodied in many different forms and should not be construed as limited to the embodiments set forth herein; rather, these embodiments are provided so that this disclosure will be thorough and complete and will fully convey the scope of the disclosure to those skilled in the art.

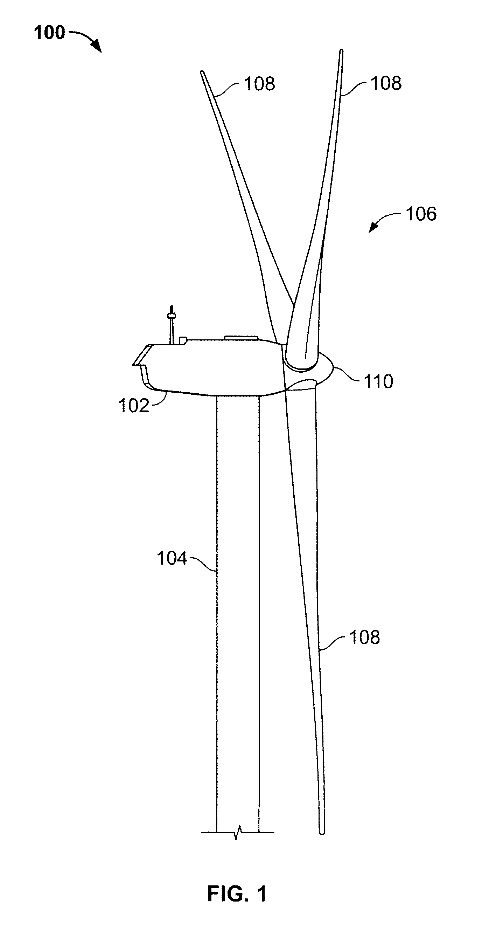

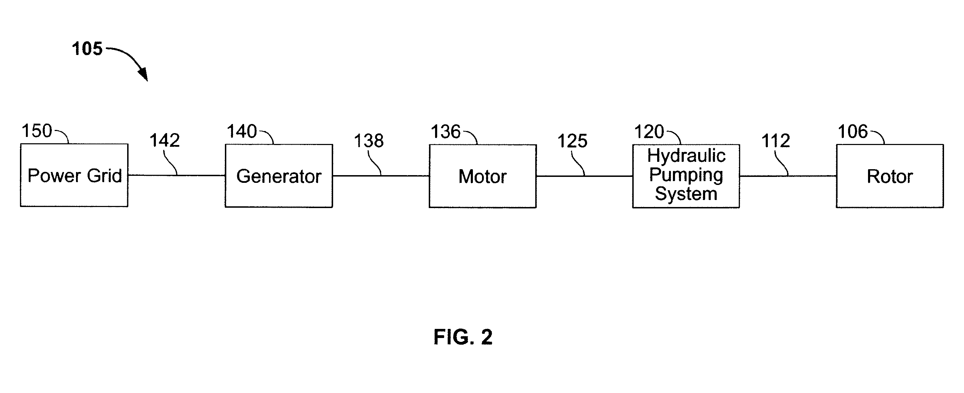

Fig. 1 shows an exemplary wind turbine 100 according to the disclosure. The wind turbine 100 includes a nacelle 102 mounted atop a tower 104 and a rotor 106. The nacelle 102 houses a wind turbine power generation system 105 (Fig. 2) for converting wind energy captured by the rotor 106 to electricity. The nacelle 102 may further house other equipment for controlling and operating the wind turbine 100. The rotor 106 includes rotor blades 108 attached to a rotating hub 110. The rotating hub 110 is connected to the wind turbine power generation system 105 and configured to provide mechanical energy thereto. In this exemplary embodiment, the wind turbine 100 includes three rotor blades 108. In another embodiment, the wind turbine may contain one or more rotor blades 108. The height of the tower 104 is selected on the basis of factors and conditions known in the art, and may extend to heights up to 60 meters or more. The wind turbine 100 may be installed on any terrain providing access to areas having desirable wind conditions. The terrain may vary greatly and may include, but is not limited to, mountainous terrain or offshore locations.

In some configurations and referring to Fig. 2, an exemplary schematic configuration of the wind turbine power generation system 105 is disclosed. The wind power generation system 105 is housed in nacelle 102 (Fig. 1). As can be seen in Fig. 2, the rotor 106 is coupled by a shaft 112 to a hydraulic pumping system 120. The rotation of the rotor 106 rotationally drives shaft 112 to provide mechanical energy to hydraulic pumping system 120 to circulate high pressure hydraulic fluid within the hydraulic pumping system 120. The hydraulic pumping system 120 is coupled to a motor 136 via a hydraulic fluid circulation system 125. The motor 136 converts energy from the circulating high pressure fluid into mechanical energy. The motor 136 may be any hydraulic motor suitable for this purpose that is known in the art. The motor 136 is coupled by a transfer device 138 to a generator 140. The generator 140 converts the mechanical energy into electricity. The generator 140 provides the generated electricity to a power grid 150 via a transmission line 142. In another embodiment, the motor 136 and generator 140 may be combined in a single device. In yet another embodiment, the pumping system 120 and the motor 136 may each consist of one or several independent pumping systems 120 or motors 136, respectively.

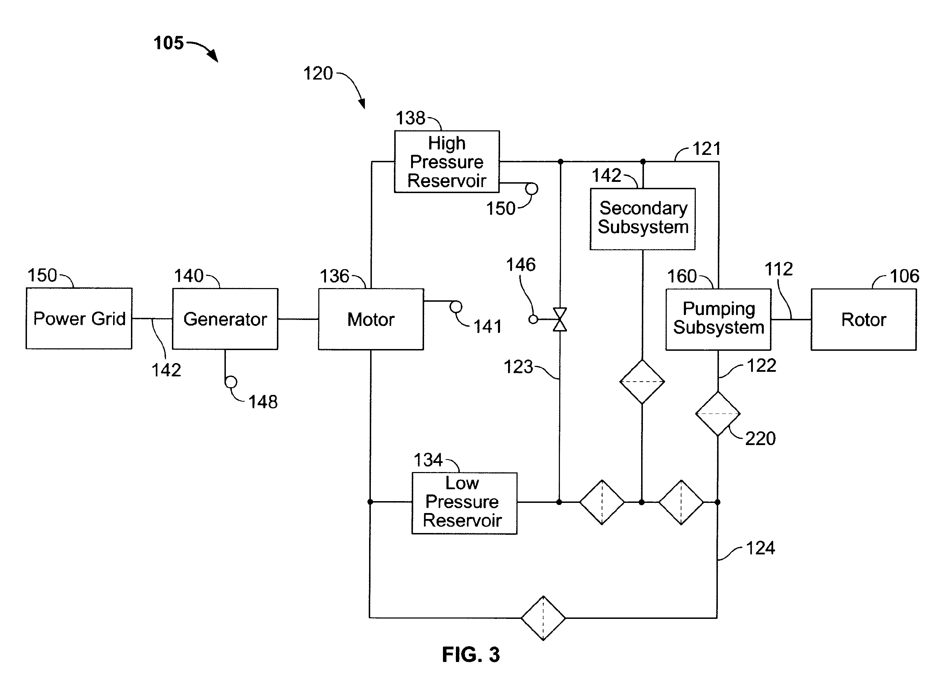

Fig. 3 shows an exemplary schematic arrangement of the hydraulic pumping system 120 within the wind turbine power generation system 105 of Fig. 2. As can be seen in Fig. 3, the hydraulic pumping system 120 includes a pumping subsystem 160. The pumping subsystem 160 includes a hydraulic pump (not shown) that is driven by shaft 112. The pump provides a high pressure fluid to motor 135 via a high pressure fluid line 121 that is in fluid communication between the pumping subsystem 160 and the motor 135. The high pressure fluid line 121 is in fluid communication with a high pressure reservoir 138. At the motor 136, some energy is removed from the high pressure fluid and a low pressure fluid is returned to the pumping subsystem 160 via a low pressure fluid line 122 that is fluid communication therebetween. The low pressure fluid line 122 is in fluid communication with a low pressure reservoir 134.

The hydraulic pumping system 120 further includes a secondary subsystem 142 in fluid communication between the high pressure fluid line 121 and the low pressure fluid line 122, a pressure release line 123 in fluid communication between the high pressure fluid line 121 and the low pressure fluid line 122, and a low pressure fluid bypass line 124 in fluid communication bypassing the low pressure reservoir 134.

The secondary subsystem 142 performs one or more secondary functions. Secondary functions refers to functions served by the high-pressure flow of operating fluid that are indirectly related to the generation of electricity, *i.e.,* functions that do not require the flow of such fluid to the generator 140. For example, the high-pressure flow of operating fluid in the secondary subsystem 142 can be used to lubricate bearings and/or the shaft 112. In this exemplary embodiment, the hydraulic pumping system 120 includes one secondary subsystem 142, however, in another embodiment, the hydraulic pumping system 120 may include one or more secondary subsystems 142. In yet another embodiment, the hydraulic pumping system 120 may have he secondary subsystem 142 omitted.

The pressure release line 123 includes a first flow control device 146 to adjust the flow of high pressure fluid from the pumping subsystem 160 among the high pressure reservoir 138 and the secondary subsystem 142 by controlling the flow through pressure release line 123. The flow control device 146 may additionally control and/or release fluid pressure between the high pressure fluid line 121 and the low pressure fluid line 122. Additionally, the first flow-control device 144 is able to control flow from the pumping subsystem 160 within the predetermined operation parameters and/or thresholds, which can vary depending on the application. The hydraulic pumping system 120 may include other flow-control devices and sensors (not shown) to control flow within the hydraulic pumping system 120. For example, a second flow control device (not shown) may control flow from the high-pressure reservoir 138 to the motor 136. The first flow control device 146, as well as the other flow-control devices, may be valves (e.g., check valves) or other devices known in the art to be suitable for such purposes.

The hydraulic pumping system 120 also includes one or more backflushing filter systems 200 in fluid communication with the low pressure fluid line 127. The backflushing filter systems provide filtration to hydraulically driven auxiliary power consumers such as, but not limited to pitch, yaw and fan drive hydraulic systems. As can be seen in Fig. 3, in this exemplary embodiment, the hydraulic pumping system 120 includes five backflushing filter systems 200 disposed at various possible positions throughout the low pressure fluid line 122.

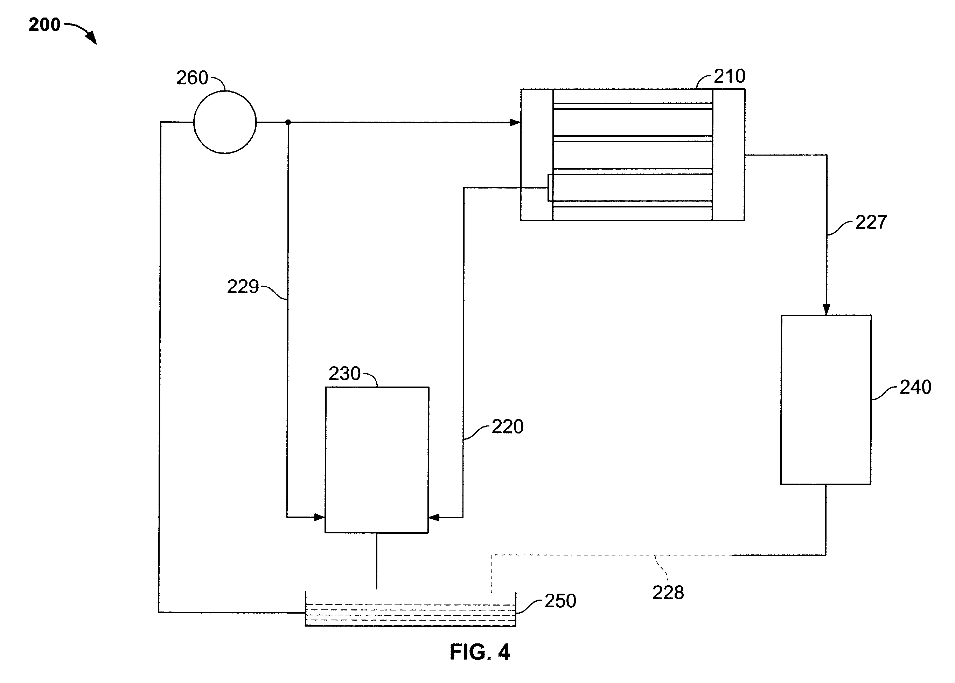

Fig. 4 illustrates an exemplary arrangement of a backflushing filter system 200 according to the disclosure. As can be seen in Fig. 4, the backflushing filter system 200 includes a backflushing filter 210, a containing filter 230, a lubricarted device 240, a low pressure reservoir 250, and a pump 260. The backflushing filter 210 is in fluid communication with lubricated device 240 via a clean oil supply line 227. Used oil is returned to the backflushing filter via an oil return line 228. The low pressure reservoir and pump 260 are in fluid communication between the lubricated device 240 and the backflushing filter 240. A backflushing return line 220 is in fluid communication between the backflushing filter 210 and the containing filter 210. The containing filter 230 may be powered by a electrical power system, a hydraulic power system, or both. An optional fluid power supply line 229 is in fluid communication between the oil return line 228 and the containing filter 230. The optional fluid power supply line 229 provides additional power to the containing filter 230 to perform the filtering function. The backflushing filter system 200 may be a backflushing filter system as disclosed in U.S. Pat. No. 5,906,733, which is incorporated herein by reference in its entirety.

The backflushing filter 210 may be selected from any backflushing filter as provided for by the fluid and particle size limitations of the particular application. The backflushing filter 210 may be a backflushing filter as disclosed in U.S. Pat. No. 6,890,434, which is incorporated herein by reference in its entirety. The backflushing filter 210 is disposed in the hydraulic flow line to filter particulate contamination from the hydraulic fluid. Backflushing filters are able to filter the total fluid flow always using 100% of the filter mesh contained within the backflushing filter 210, whereas traditional filters need to be chosen for capacity on an almost-clogged condition so as not to create a high pressure drop in the low pressure line.

The circulation system 220 and containing filter 230 are arranged and configured to permit the backflushing filter 210 to be backflushed to remove particulate contamination that has been entrained in the backflushing filter 210. By backflushing the backflushing filter 210, mesh or other particulate entrapment structure or material of the backflushing filter may be cleaned so that the backflushing filter 210 may perform within a predetermined pressure drop over the lifetime of the backflushing filter 210.

The containing filter 230 may be a centrifugal filter or other filter selected to entrain particulate contamination of a predetermined particle size range for a fluid for a particular application. For example, the circulation system 220 and containing filter 230 may be selected from the liquid cleaning system as disclosed in U.S. Pat. No. 5,906,733.

The wind turbine power generation system 105 may include additional backflushing filter systems 200 in fluid communication with the gearbox, mainbearing, brake oil circuits and/or any other auxiliary systems. Any of the backflushing filter systems 200 of the wind turbine power generation system 105 may commonly use circulation system 200 and containing filter 230 components. In one embodiment, one backflushing filter 210 may be disposed in the gearbox oil circuit, a second backflushing filter 210 may be disposed in the mainbearing oil circuit, and a single containing filter 230 is used to backflush both backflushing filters 210.

The wind turbine power generation system 105 further includes valves, controls, and fluid systems to operate the backflushing filter systems 200. In one embodiment, the backflushing filter system 200 includes controls to automate the scheduled backflushing of the backflushing filters 210 as determined by a predetermined schedule. In another embodiment, the backflushing process is a continuous process within a backflushing filtering system in the sense that there is a continuous routine of backflushing parts of the filtering system in a sequence.

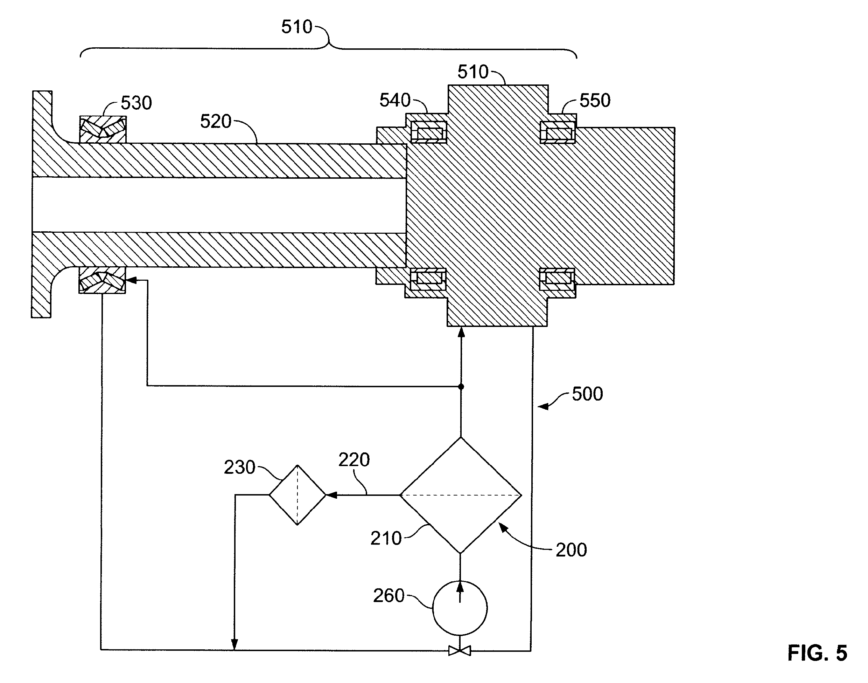

Fig. 5 shows an exemplary configuration of a lubricating system 500 circulating a lubricating fluid in fluid communication at least one component of a drivetrain system 510. The drivetrain system 510 includes a transmission 510 driven by a shaft 520 that is supported by a first bearing 530, a second bearing 540 and a third bearing 550. The shaft 520 is driven by a rotor 106 (Fig. 2). The second bearing 540 and/or the third bearing 550 may optionally be integrated into the transmission 510. Transmission 510 may be a gearbox. In this exemplary embodiment, the first bearing 530 and at least on of the second bearing 540, third bearing 550 and transmission 510 are in fluid communication with lubricating system 500.

As further shown in Fig. 5, the lubricating system 500 includes a backflusing filter system 200. The backflushing filter system 200 includes a backflusing filter 210, a containing filter 230 and a pump 260. The backflushing filter 210 provides a part of the lubricating fluid to containing filter 230. The containing filter 230 collects contamination such as, but not limited to dirt and metal particlulates, from the lubricating fluid. The containing filter 230 may be a centrifugal filter. The rotation in the centrifugal filter may partially driven by lubricating fluid from the backflushing fluid line 220 and partially by a fluid stream (not shown) tapped from upstream the backflushing filter.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

Various aspects and embodiments of the present invention are defined by the following numbered clauses:
1. A wind turbine, comprising:
   a wind turbine power generation system comprising a backflushing filter system.
2. The system of clause 1, wherein the backflushing filter system is configured to remove particulate contamination from a fluid of an auxiliary power consumer.
3. The system of any preceding clause, wherein the backflushing filter system is configured to remove particulate contamination from a fluid of a hydraulic pumping system.
4. The system of any preceding clause, wherein the backflushing filter system is configured to remove particulate contamination from a mainbearing oil circuit.
5. The system of any preceding clause, wherein the backflushing filter system is configured to remove particulate contamination from a gearbox oil circuit.
6. The system of any preceding clause, wherein the backflushing filter system is configured to remove particulate contamination from a brake oil circuit.
7. The system of any preceding clause, wherein the backflushing filter system comprises a backflushing filter, a circulation system and a containing filter.
8. The system of any preceding clause, wherein the containing filter is a centrifugal filter.
9. The system of any preceding clause, wherein the centrifugal filter is powered by a power source.
10. The system of any preceding clause, wherein the power source is electrical.
11. The system of any preceding clause, further comprising an automated control system to periodically operate the backflushing system on a predetermined schedule.
12. A method of cleaning a fluid of a wind turbine power generation system, comprising:
   providing a wind turbine power generation system, and
   circulating the fluid through a backflushing filter system to remove particulate contamination.
13. The method of clause 12, wherein the backflushing filter system removes particulate contamination from a hydraulically driven auxiliary power consumer.
14. The method of clause 12 or 13, wherein the backflushing filter system removes particulate contamination from a low pressure hydraulic fluid line of a hydraulic pumping system.

## Claims

1. A wind turbine, comprising:
a wind turbine power generation system (105) comprising a backflushing filter system (200).

2. The system of claim 1, wherein the backflushing filter system (200) is configured to remove particulate contamination from a fluid of an auxiliary power consumer.

3. The system of any preceding claim, wherein the backflushing filter system (200) is configured to remove particulate contamination from a fluid of a hydraulic pumping system.

4. The system of any preceding claim, wherein the backflushing filter system (200) is configured to remove particulate contamination from a mainbearing oil circuit.

5. The system of any preceding claim, wherein the backflushing filter system (200) is configured to remove particulate contamination from a gearbox oil circuit.

6. The system of any preceding claim, wherein the backflushing filter system (200) is configured to remove particulate contamination from a brake oil circuit.

7. The system of any preceding claim, wherein the backflushing filter system (200) comprises a backflushing filter (210), a circulation system (220) and a containing filter (230).

8. The system of claim 7, wherein the containing filter (230) is a centrifugal filter.

9. The system of claim 8, wherein the centrifugal filter is powered by a power source.

10. The system of claim 9, wherein the power source is electrical.
